# EUROPÄISCHE PATENTSCHRIFT

(11) **EP 0 723 803 B1**
(45) Veröffentlichungstag und Bekanntmachung des Hinweises auf die Patenterteilung: **03.05.2000**
(21) Anmeldenummer: 95810807.8
(22) Anmeldetag: 19.12.1995
(51) Int. Cl.: B01D 53/84

(54) **Nachreinigungsvorrichtung für Abgasfiltertürme**
Post-purification device for exhaust gas scrubbers
Dispositif de post-purification pour les laveurs de gaz d'échappement

(30) Priorität: 27.01.1995 CH 22995
(43) Veröffentlichungstag der Anmeldung: 31.07.1996
(73) Patentinhaber: LINDE BRV Biowaste Technologies AG, 6300 Zug (CH)
(72) Erfinder: Rindelaub, Frank, 2014 Bôle (NE) (CH)
(74) Vertreter: AMMANN PATENTANWÄLTE AG BERN AMMANN INGENIEURS-CONSEILS EN PROPRIETE INTELLECTUELLE SA BERNE AMMANN PATENT ATTORNEYS LTD BERNE

(56) Entgegenhaltungen:
- DE-A- 3 228 997
- DE-A- 3 628 030
- DE-A- 3 811 399
- DE-A- 4 224 544
- DE-C- 4 223 774
- WASSER, LUFT UND BODEN, Bd. 36, Nr. 6, 1.Juni 1992 Seiten 42-43, XP 000295871 JUNGHANS M ET AL 'BIOFILTER ALS ALTERNATIVE ZUM AKTIVKOHLEFILTER'

## Beschreibung

Die vorliegende Erfindung bezieht sich auf Nachreinigungsvorrichtungen gemäss Oberbegriff des Anspruchs 1.

Abluftfiltertürme, insbesondere sogenannte Bio-Filtertürme, dienen dazu, mit biologisch abbaubaren Stoffen belastete Abluft zu reinigen. Derartige Abluft tritt z. B. in Kompostiereinrichtungen, Tierverwertungsanstalten und Stallanlagen auf. Einen derartigen Bio-Filterturm bzw. das Reinigungsverfahren, nach dem dieser Filterturm arbeitet, ist in der europäischen Patentanmeldung EP-A-0 575 294 des Anmelders beschrieben. M. Junghans, B. Dittrich, Wasser, Luft und Boden 36 (1992) 42/3, betrifft einen Biofilter mit nachgeschaltetem Aktivkohlefilter. In einem der Verfahrensschemata der Versuchsanlagen ist ein Tropfenabscheider zwischen einem Biowäscher und dem aus Sicherheitsgründen nachgeschalteten Aktivkohlefilter dargestellt.

Mit der zunehmend dichter werdenden Besiedlung ergibt sich notwendigerweise eine immer grössere Nähe zwischen Wohngebieten und Anlagen, die derartige Abluft erzeugen. Auch wenn mit den Bio-Filtertürmen, wie in der vorgenannten europäischen Patentanmeldung beschrieben, die gesetzlichen Grenzwerte eingehalten werden können, ist nicht auszuschliessen, dass sich Teile der angrenzenden Wohnbevölkerung geruchsmässig belästigt fühlen.

Eine Aufgabe der vorliegenden Erfindung besteht darin, eine Vorrichtung anzugeben, die eine hohe Wirkung und/oder Lebensdauer aufweist und insbesondere der Geruchsbelästigung entgegenwirkt.

Eine derartige Vorrichtung ist im Anspruch 1 angegeben. Die weiteren Ansprüche geben bevorzugte Ausbildungen der Erfindung an.

Demgemäss wird vor dem Abzug des Bio-Filterturmes eine Nachreinigungseinrichtung im Bio-Filterturm eingefügt. Die Nachreinigungseinrichtung besteht im wesentlichen aus einer Filterschicht oder einem Filterbett mit Aktivkohle. Um eine ausreichende Lebensdauer und Wirksamkeit der Aktivkohle zu gewährleisten, wird im Abluftstrom vor dem Aktivkohlebett ein sogenanntes Abscheiderbett eingefügt. Dieses Abscheiderbett hat insbesondere die Aufgabe, den Wassergehalt der Abluft auf einen Wert von unter 65 % zu senken, da bei Luftfeuchtigkeiten oberhalb dieses Wertes die Aktivkohle innert kürzester Zeit mit Wasser gesättigt wird und ihre Absorptionsfähigkeit für andere Stoffe weitgehend verliert.

Das Abscheiderbett kann ebenfalls im wesentlichen eine Aktivkohleschicht sein, die durch Absorption die Luftfeuchtigkeit reduziert. Bei Sättigung wird weitere Feuchtigkeit als Tropfen ausgeschieden und muss abgeführt werden. Im einfachsten Fall tropft dieses Wasser gegen den Abluftstrom zurück in den Filterturm. Ein derartiges Bett kann als Opferbett betrachtet werden.

Ein derartiges Opferbett zieht nach sich, dass der Feuchtigkeitsgehalt der abgegebenen Luft reduziert ist. Da in der Regel ein bestimmter Wasseraustrag mit der Abluft vorgegeben wird, kann hierdurch ein problematischer Überschuss an Wasser in der Anlage auftreten, der gegebenenfalls dadurch ausgeglichen werden muss, dass die Anlage für einen grösseren Abluftdurchsatz ausgelegt wird.

Eine andere Möglichkeit besteht in der Verwendung einer aus der Lüftungstechnik an sich bekannten Wasserabscheidungstechnik, z. B. sogenannte Tropfabsorber, wobei die Abluft in der Regel abgekühlt wird, um das Auskondensieren der Luftfeuchtigkeit zu bewirken. Ausgehend von einer Luftfeuchtigkeit von ca. 100 % kann z. B. eine Abkühlung von 10 - 15 °C für eine ausreichende Kondensierung vorgesehen werden.

Danach wird die Luft wieder genügend erwärmt, bevorzugt unter Verwendung der der Luft im Abscheider entzogenen Wärme, um die für das Aktivkohlebett verträgliche relative Luftfeuchtigkeit einzustellen. Das aus der Abluft abgeschiedene Wasser wird bevorzugt in einem weiteren Bett, das dem Aktivkohlebett nachgeschaltet ist, wieder in die Abluft eingeführt, so dass im Idealfall ein wärme- und wasserneutraler Betrieb der Nachreinigungsvorrichtung erreicht werden kann.

Die Erfindung soll weiter an einem Ausführungsbeispiel unter Bezug auf die Figur erläutert werden:

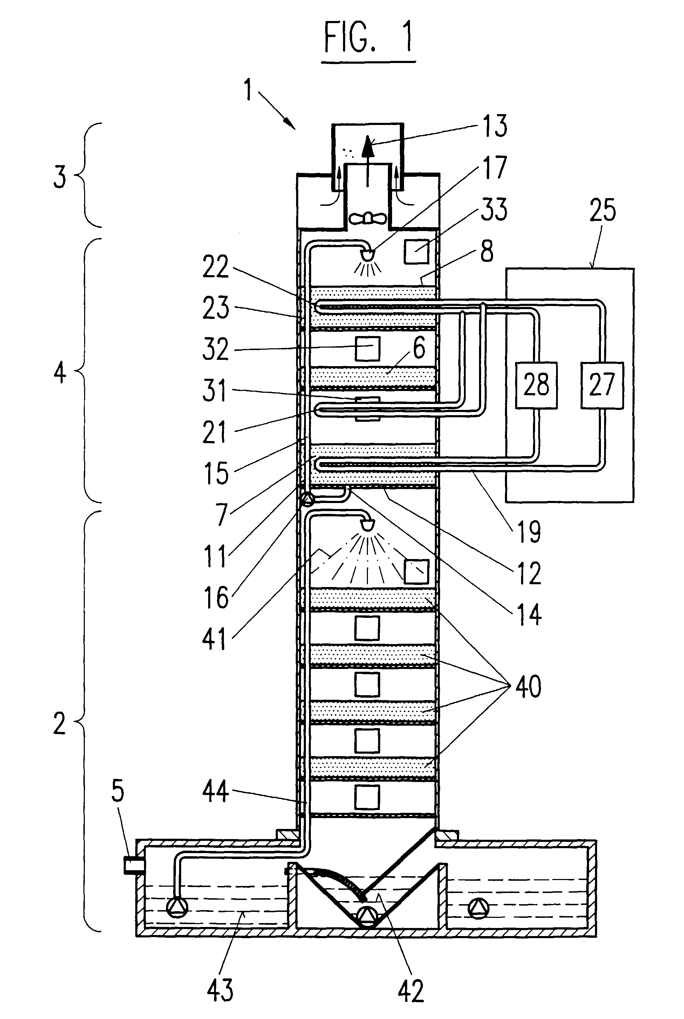

- Figur 1: zeigt schematisch einen Schnitt durch einen Bio-Filterturm mit Nachreinigungseinheit.

Der Bio-Filterturm 1 stimmt in den Sektionen 2 (eigentlicher Filterturm) und Sektion 3 (Abzug) mit dem Bio-Filterturm gemäss EP-A-0 575 294 überein, auf deren Beschreibung hiermit bezüglich dieser Teile verwiesen wird.

Die Wände des Turms bestehen aus Holz von ca. 60 mm Stärke. Holz bietet einfache Befestigungsmöglichkeiten für z. B. die Filterbetten und andere Einrichtungen, isoliert gut und ist ökologisch verträglich. Typische Höhen derartiger Filtertürme liegen um 10 - 15 m ohne Abzug.

Die zu reinigenden Abgase treten am Einlass 5 in den Turm ein und durchströmen den Turm von unten nach oben im Sinne des Pfeils 13. Die Reinigung erfolgt in den Bio-Filterbetten 40 des Turms, die entgegen dem Abluftstrom von Betriebswasser 41 durchströmt werden, um die abgeschiedenen Ballaststoffe und deren Abbauprodukte in den Sumpf 42 des Turms auszuwaschen. Das Betriebswasser 41 zirkuliert über ein Absitzbecken 43 und eine Steigleitung 44 im Turm.

Für die vorliegende Erfindung ist es vorteilhaft, wenn der herkömmliche Biofilterturm eine hohe Wirksamkeit besitzt, so dass die Nachreinigungsvorrichtung der vorliegenden Erfindung nur noch geringe Restmengen von Ballaststoffen aufnehmen kann und damit eine grosse Lebendauer aufweist. Der in diesem Ausführungsbeispiel gemäss EP-A-0 575 294 verwendete Turm weist diese Wirksamkeit auf.

Die Sektion 4 beinhaltet die erfindungsgemässe Nachreinigungseinheit. Sie weist drei Betten auf: das Filterbett 6, das mit Aktivkohle beschickt ist; das Abscheiderbett 7; und ein weiteres, dem Filterbett nachgeschaltetes Bett 8, das im weiteren als Ausgleichsbett bezeichnet werden soll.

Das Filterbett 6 besteht aus Aktivkohle, die auf einer geeigneten, für die Abluft durchgängigen Unterlage ausgebreitet ist. Die Aktivkohle kann lose auf der Unterlage ausgebreitet sein oder in Säcken oder anderen Behältern eingepackt vorliegen, wobei natürlich diese Behälter selbst auch wieder für die Abluft durchgängig sein müssen. Um zu vermeiden, dass bei Verwendung abgepackter Aktivkohle Abluft zwischen den Hüllen der Verpackung hindurchtreten kann, ohne die Aktivkohle zu passieren, können lückenlos aneinander anlegbare Verpackungsformen gewählt werden. Eine andere Möglichkeit besteht im Auslegen von mindestens zwei Lagen Aktivkohle, wobei die Packungen in den mindestens zwei Lagen versetzt zueinander angeordnet werden.

Das davor befindliche Abscheiderbett 7 besteht aus dem Abscheiderbettkörper 11 auf einer Unterlage 12, die als Sammelbehälter für im Abscheiderbett abgeschiedenes Wasser ausgebildet ist. An der Unterlage 12 befindet sich ein Ablauf 14, von dem eine Leitung 15 mit Pumpe 16 abgeht. Am anderen Ende der Leitung 15 oberhalb des Ausgleichsbetts 8 befindet sich eine Düse 17, die das im Abscheiderbett abgeschiedene und durch die Pumpe 16 abgesaugte Wasser möglichst gleichmässig über das Ausgleichsbett 8 verteilt.

Der Abscheiderbettkörper 11 ist in der Art eines gängigen Tropfabsorberss aus der Lüftungstechnik ausgestaltet. Es weist also eine grosse Oberfläche für die hindurchstreichende Abluft auf. Mögliche Ausführungsformen sind Vlies oder aus Kunststoffelementen. Der Abscheiderbettkörper 11 ist mittels Kühlschlangen 19 kühlbar. Im Betrieb wird im Abscheiderbett 8 die hindurchtretende Abluft abgekühlt, wobei sich am Abscheiderbettkörper 11 Feuchtigkeit aus der Abluft niederschlägt.

Über dem Abscheiderbett 7 befindet sich ein Wärmetauscher oder Heizkörper 21, der die aus dem Abscheider austretende Abluft erwärmt und dadurch die relative Luftfeuchtigkeit erniedrigt. Er ist in hinreichendem Abstand vom Abscheiderbett angeordnet, um die Funktion desselben nicht zu beeinträchtigen. Durch diese Anordnung wird erreicht, dass die relative Luftfeuchtigkeit genügend gesenkt wird, dass die Aktivkohle des Filterbettes 6 nicht durch Absorption von Wasserdampf überlastet wird. Aus der Erfahrung ist ein oberer Grenzwert für diese relative Luftfeuchtigkeit von 65 % bekannt.

Nach Durchtritt durch das Filterbett 6 durchdringt die Abluft das Ausgleichsbett 8. Das Ausgleichsbett 8 wird mit dem im Abscheiderbett abgeschiedenen Wasser mittels der Düse 17 befeuchtet. Dargestellt ist ein weiterer Wärmetauscher oder Heizkörper 22, um die Abluft nochmals erwärmen zu können. Sofern ein solcher Heizkörper 22 vorhanden ist, sind geeignete, nicht dargestellte Stellelemente vorgesehen, über die der Kühlmedium- und damit der Wärmefluss zwischen den beiden Wärmetauschern eingestellt werden kann. Der Körper 23 dieses Betts ist so ausgeführt, dass es gegenüber dem Abluftstrom eine möglichst grosse Oberfläche aufweist, z. B. ähnlich wie das Abscheiderbett 7 als Vlies oder als Labyrinth aus Plastikkörpern.

Die Kühlschlangen 19 sowie die Heizkörper 21 und 22 sind an eine Wärmepumpe 25 angeschlossen. Als zirkulierendes Kühlmedium kann in der Regel Wasser verwendet werden. Die Wärmepumpe 25 weist ein Heizelement 27 und ein Kühlelement 28 auf, die auf eine in Wärmepumpen übliche Art thermisch gekoppelt sind. Zusätzlich kann die Wärmepumpe zum Ausgleich eines Wegdriftens noch eine zusätzliche Heizung bzw. Kühlung aufweisen, sowie eine entsprechende Steuerung. Zur Umwälzung des in den Heizkörpern bzw. den Kühlschlangen zirkulierenden Mediums enthält die Kühleinheit 28 und/oder das Heizelement 27 eine Pumpe. Pumpe, Steuerung und zusätzliche Heizung oder Kühlung sind nicht gesondert dargestellt.

Der Zugang zu den einzelnen Betten 6, 7, 8 wird durch Wartungsluken 31, 32 und 33 hergestellt. Die Wartungsluke 32 für das Filterbett ist so ausgeführt, dass Wartungspersonal in den Filterturm gelangen kann. Der Abstand zwischen Ausgleichsbett 8 und Filterbett 6 ist demgemäss etwa so zu wählen, dass eine lichte Höhe von ca. Mannsgrösse entsteht. Zum Entfernen von lose verteilter Aktivkohle haben sich an sich bekannte, pneumatische Fördereinrichtungen bewährt. Das Entfernen der Aktivkohle geschieht dadurch, dass eine bewegliche Absaugvorrichtung über das Filterbett bewegt wird, wodurch in der Art eines Staubsaugers die Aktivkohle abgesaugt wird und z. B. in einen bereitstehenden Lastwagen gelangt. Das Filterbett 6 wird dann gefüllt, indem mittels Druckluft frische Aktivkohle zum Filterbett gefördert wird und mittels des flexiblen Endes möglichst gleichmässig verteilt wird. Sowohl zum Entleeren wie zum Befüllen ist also die gleiche pneumatische Fördereinrichtung einsetzbar unter Umkehrung des Luftstroms.

Bei Beschickung des Filterbetts 6 mit Aktivkohle, die in Behältern abgefüllt ist, erübrigt sich eine pneumatische Fördereinrichtung. Allenfalls ist eine Absaugeinrichtung denkbar, um etwaige Reste von Aktivkohle zu beseitigen.

Insbesondere ist es denkbar, die Aktivkohle in Behältern zu verwenden, die in Anpassung an die in der Regel runde Bauform der Bio-Filtertürme die Form von Sektoren haben. Am Umfang des Turmes können dann Luken vorgesehen werden, durch die die Behälter mit verbrauchter Aktivkohle entnommen und durch solche mit frischer Aktivkohle ersetzt werden können.

Eine bekannte, einsetzbare Verpackungsform sind Pakete von 1,5 x 1 X 0,5 m³. Die Pakete, deren Hüllen z. B. aus Gewebe mit einer Maschenweite von 3 mm bestehen, enthalten Aktivkohle in zylinderförmigen Partikeln von ca. 5 mm Durchmesser. Derartige Aktivkohle ist auch für die Beschickung des Filterbetts 6 in loser Form geeignet.

Ein wesentlicher Vorteil der Nachreinigungsvorrichtung liegt darin, dass der Abluft bei optimaler Führung weder Wasser noch wesentliche Wärmemengen entzogen oder zugeführt werden müssen.

Ausgehend von dem am Ausführungsbeispiel dargelegten Konzept sind dem Fachmann verschiedene Ausgestaltungsmöglichkeiten und Anpassungen an vorgegebene Bedingungen zugänglich. Insbesondere hat es sich bewährt, die Filtertürme so auszuführen, so dass sich relativ dünne Betten mit grossem Querschnitt und verringertem Strömungswiderstand ergeben. Die Dicke der Aktivkohleschicht im Filterbett 6 wird so gewählt, dass eine bestimmte, vorgegebene Verweilzeit eingehalten wird.

Betreffend das Abscheiderbett 7 ist es auch denkbar, dieses als Opferbett mit Aktivkohlefüllung auszuführen. Das der Abluft entzogene Wasser, das das Opferbett nicht mehr aufnehmen kann, tropft dann in den Filterturm zurück. Es ist also möglich, auf das Ausgleichsbett, die Wasserzirkulation zwischen Abscheider-, Ausgleichsbett sowie die Heiz- und Kühleinrichtung (Wärmepumpe) zu verzichten. Nicht ausgeschlossen ist aber auch hier die Rückführung in den Luftstrom mittels des Ausgleichsbetts. Bei einer solchen Ausführung kann, ähnlich wie beim Filterbett 6, eine Möglichkeit vorgesehen werden, den Körper 11 bei Bedarf oder in regelmässigen Intervallen auszutauschen.

Das Ausgleichsbett kann auch ohne den Wärmetauscher oder Heizkörper 22 ausgeführt werden. Statt einer Wärmepumpe kann auch eine andere Vorrichtung vorgesehen werden, um die Wärmetauscher 19, 21, 22 zu betreiben. Denkbar sind ein einfaches Kühlaggregat, Kühlen des Vorlaufs zur Kühlschlange 19 mit Frischwasser bzw. Kühlwasser aus anderen Anlagenteilen und/oder auch eine Heizung des Vorlaufs zum Heizkörper 21.

Statt aus Holz kann der Turm aus anderem Material bestehen, wie Beton, Metall, und die Höhe und der Durchmesser des Turms kann in weitem Umfang an die örtlichen Gegebenheiten angepasst werden.

## Patentansprüche

1. Nachreinigungsvorrichtung (4) an einem Filterturm zur Reinigung belasteter Abluft mit einem Filterbett(6), dessen Körper aus Aktivkohle besteht, dadurch gekennzeichnet, dass dem Filterbett (6) ein Abscheiderbett (7) zur Begrenzung der Luftfeuchtigkeit der das Filterbett durchdringenden Abluft vorgesetzt ist und eine Kühlvorrichtung (19) enthält, um die Abscheidung von Luftfeuchtigkeit durch Abkühlen zu ermöglichen.

2. Nachreinigungsvorrichtung gemäss Anspruch 1, dadurch gekennzeichnet, dass der Körper (11) des Abscheiderbettes (7) aus Aktivkohle besteht.

3. Nachreinigungsvorrichtung gemäss Anspruch 1, dadurch gekennzeichnet, dass das Abscheiderbett (7) ein Tropfabsorber ist.

4. Nachreinigungsvorrichtung gemäss einem der Ansprüche 1 bis 3, dadurch gekennzeichnet, dass sich im Abluftstrom hinter dem Filterbett (6) ein Ausgleichsbett (8) befindet, auf das über eine Leitung (15) und eine Düse (17) das im Abscheiderbett (7) abgeschiedene Wasser aufbringbar ist, um durch Verdunstung das Wasser wieder von der Abluft aufnehmen zu lassen.

5. Nachreinigungsvorrichtung gemäss einem der Ansprüche 1 bis 4, dadurch gekennzeichnet, dass im Abluftstrom hinter dem Filterbett (6) ein Ausgleichsbett (8) angeordnet ist, das mit einer Heizvorrichtung (22) versehen ist, wodurch der Abluft im Ausgleichsbett (8) Wärme zuführbar ist.

6. Nachreinigungsvorrichtung gemäss einem der Ansprüche 1 bis 5, dadurch gekennzeichnet, dass zwischen Abscheiderbett (7) und Filterbett (6) ein Wärmetauscher (21) vorhanden ist, um die Abluft vor Eintritt in das Filterbett (6) soweit erwärmen zu können, dass sie eine die Funktion des Filterbetts (6) nicht mehr wesentlich beeinträchtigende relative Luftfeuchtigkeit aufweist.

7. Nachreinigungsvorrichtung gemäss einem der Ansprüche 1 bis 6, dadurch gekennzeichnet, dass die Kühlvorrichtung (19) und die Heizkörper (21, 22) über eine Wärmepumpe (25) betrieben werden.

8. Nachreinigungsvorrichtung gemäss einem der Ansprüche 1 bis 7, dadurch gekennzeichnet, dass die im Abscheiderbett (7) der Abluft entzogene Wärme in etwa gleich der Wärme ist, die der Abluft über die Heizvorrichtungen (21, 22) wieder zugeführt wird.

9. Filterturm mit einer Nachreinigungsvorrichtung gemäss einem der Ansprüche 1 bis 8, dadurch gekennzeichnet, dass der Filterturm (1) mindestens ein biologisches Filterbett (40) aufweist, und Einrichtungen (5, 13; 42, 43, 44) vorhanden sind, um einen Luftstrom durch das biologische Filterbett in Richtung der Nachreinigungsvorrichtung zu bewirken und das Filterbett (40) im Gegenstrom zur Abluft von im Filterturm (1) zirkulierenden Betriebswasser (41) zu durchströmen.

## Claims

1. Post-purification device (4) in a filter tower for the purification of contaminated exhaust air comprising a filter bed (6) whose body consists of activated carbon,
characterised in that the filter bed (6) is preceded by a condenser bed (7) for the purpose of limiting the humidity of the exhaust air permeating the filter bed, the condenser bed comprising a cooling device (19) allowing the precipitation of air humidity by cooling.

2. Post-purification device according to claim 1, characterised in that the body (11) of the condenser bed (7) consists of activated carbon.

3. Post-purification device according to claim 1, characterised in that the condenser bed (7) is a drop absorber.

4. Post-purification device according to one of claims 1 to 3, characterised in that in the exhaust air downstream of the filter bed (6), a compensating bed (8) is disposed which is capable of being supplied by a conduit (15) and a nozzle (17) with the water precipitated in the condenser bed (7) in order to let the exhaust air absorb the water by evaporation.

5. Post-purification device according to one of claims 1 to 4, characterised in that in the exhaust air downstream of the filter bed (6), a compensating bed (8) is disposed which is provided with a heating device (22) allowing to heat the exhaust air in the compensating bed (8).

6. Post-purification device according to one of claims 1 to 5, characterised in that between the condenser bed (7) and the filter bed (6), a heat exchanger (21) is provided in order to be able to heat the exhaust air prior to its admission to the filter bed (6) to such an extent that its relative air humidity does no longer substantially impair the function of the filter bed (6).

7. Post-purification device according to one of claims 1 to 6, characterised in that the cooling device (19) and the heaters (21, 22) are operated via a heat pump (25).

8. Post-purification device according to one of claims 1 to 7, characterised in that the heat extracted from the air in the condenser bed (7) is approximately equal to the heat which is subsequently supplied to the exhaust air by the heating devices (21, 22).

9. Filter tower comprising a post-purification device according to one of claims 1 to 8, characterised in that the filter tower (1) comprises at least one biological filter bed (40), and installations (5, 13; 42, 43, 44) are provided in order to produce an air stream through the biological filter bed towards the post-purification device and to percolate the filter bed (40) with process water (41) circulating in the filter tower (1) countercurrently to the exhaust air.

## Revendications

1. Dispositif de post-purification (4) dans une tour à filtres pour la purification d'air d'échappement pollué comprenant un lit filtrant (6) dont le corps consiste de charbon actif, caractérisé en ce que le lit filtrant (6) est précédé par un lit condensateur (7) servant à limiter l'humidité de l'air d'échappement qui pénètre le lit filtrant, ledit lit condensateur comportant un dispositif de refroidissement (19) permettant la précipitation de l'humidité de l'air par refroidissement.

2. Dispositif de post-purification selon la revendication 1, caractérisé en ce que le corps (11) du lit condensateur (7) consiste de charbon actif.

3. Dispositif de post-purification selon la revendication 1, caractérisé en ce que le lit condensateur (7) est un absorbeur de gouttes.

4. Dispositif de post-purification selon l'une des revendications 1 à 3, caractérisé en ce qu'un lit de compensation (8) est disposé dans le courant d'air d'échappement en aval du lit filtrant (6), une conduite (15) et une buse (17) permettant de distribuer l'eau précipitée dans le lit condensateur (7) sur ledit lit de compensation afin de faire absorber l'eau évaporée par l'air d'échappement.

5. Dispositif de post-purification selon l'une des revendications 1 à 4, caractérisé en ce qu'un lit de compensation (8) est disposé dans le courant d'air d'échappement en aval du lit filtrant (6), ledit lit de compensation étant muni d'un dispositif de chauffage (22) permettant un apport de chaleur à l'air d'échappement dans le lit de compensation (8).

6. Dispositif de post-purification selon l'une des revendications 1 à 5, caractérisé en ce qu'un échangeur de chaleur (21) est disposé entre le lit condensateur (7) et le lit filtrant (6) afin de permettre un chauffage de l'air d'échappement avant son admission au lit filtrant (6) tel que l'humidité relative de l'air n'affecte plus substantiellement le fonctionnement du lit filtrant (6).

7. Dispositif de post-purification selon l'une des revendications 1 à 6, caractérisé en ce que le dispositif de refroidissement (19) et les éléments de chauffage (21, 22) sont opérés par l'intermédiaire d'une pompe de chaleur (25).

8. Dispositif de post-purification selon l'une des revendications 1 à 7, caractérisé en ce que la chaleur extraite de l'air d'échappement dans le lit condensateur (7) est approximativement égale à la chaleur rapportée à l'air d'échappement par les dispositifs de chauffage (21, 22).

9. Tour à filtres munie d'un dispositif de post-purification selon l'une des revendications 1 à 8, caractérisée en ce que la tour à filtres (1) comporte au moins un lit filtrant biologique (40), et que des installations (5, 13; 42, 43, 44) sont prévues afin de produire un courant d'air traversant le lit filtrant biologique en direction dudit dispositif de post-purification, et d'irriguer le lit filtrant (40) avec de l'eau de service (41) circulant dans la tour à filtres (1) à contre-courant de l'air d'échappement.
